# EUROPÄISCHE PATENTANMELDUNG

(11) **EP 1 672 385 A1**
(43) Veröffentlichungstag der Anmeldung: **21.06.2006**
(21) Anmeldenummer: 04030188.9
(22) Anmeldetag: 20.12.2004
(51) Int. Cl.: G01S 13/75, G01S 7/35

(54) **Produktions-, Antriebs- oder Bearbeitungsanlage mit Transpondervorrichtung**

(71) Anmelder: SIEMENS AKTIENGESELLSCHAFT, 80333 München (DE)
(72) Erfinder: Gila, Janos, Dr., 2340 Mödling (AT); Konrad, Wolgagng, Dr., 2340 Mödling (AT); Resel, Leopold, 1030 Wien (AT)

(57) **Zusammenfassung**

Die Erfindung betrifft eine Produktions-, Antriebs- oder Bearbeitungsanlage mit mindestens einer Transpondervorrichtung zum Austausch von Funksignalen mit einem mobilen Bedien- und Beobachtungsgerät zur Lokalisierung des mobilen Bedien- und Beobachtungsgeräts. Die Transpondervorrichtung ist zum Senden eines Funkantwortsignals in Reaktion auf ein Abfragesignal ausgebildet. Die Transpondervorrichtung ist vorzugsweise als aktive, verstärkende Transpondervorrichtung ausgebildet und ermöglicht eine Phasenmodulation des Funkantwortsignals mit einer Subträgerfrequenz bei gleich bleibender Trägerfrequenz. Funkantwort- und Abfragesignale werden im continuous Mode (cw) erzeugt und ermöglichen eine Abstandsbestimmung zwischen mobilem Bedien- und Beobachtungsgerät und Transpondervorrichtung mittels FMCW Radar Technik.

## Beschreibung

Die Erfindung betrifft eine Produktions-, Antriebs- oder Bearbeitungsanlage mit mindestens einer Transpondervorrichtung zur Lokalisierung eines mobilen Bedien- und Beobachtungsgeräts für Automatisierungskomponenten der Produktions-, Antriebs- oder Bearbeitungsanlage.

Produktions-, Antriebs- oder Bearbeitungsanlagen sind alle Arten von technischen Geräten und Systemen sowohl in Einzelanordnung als auch in datentechnischer Vernetzung z.B. über einen Feldbus. Bei industriellen Anwendungen fallen darunter einzelne Betriebsmittel, z.B. Antriebe und Bearbeitungsmaschinen. Eine solche Anlage kann aber auch eine Produktionsanlage sein, bei der mit lokal verteilten Betriebsmitteln ein gesamter technischer Prozess betrieben wird, z.B. eine chemische Anlage oder Fertigungsstraße. Produktions-, Antriebsoder Bearbeitungsanlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet. Zur Entlastung dieser Steuerungen weisen Automatisierungen weitere spezielle Geräte auf, welche eine Schnittstelle für Bedienpersonal bilden. Diese werden als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden Produktions-, Antriebs- oder Bearbeitungsanlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der Produktions-, Antriebs- oder Bearbeitungsanlage möglich, meist in Form von Messwerten und Meldungen. Andererseits wird es durch gezielte Vorgabe von Bedienhandlungen und Dateneingaben ermöglicht, die Produktions-, Antriebs- oder Bearbeitungsanlage in gewünschte Zustände zu überführen.

Vielfach sind die HMI Geräte z.B. in Form von Terminals als stationäre Komponenten in ein Automatisierungssystem fest integriert. Derartige Terminals sind dann in der Regel fest über Kabelverbindungen mit dem Automatisierungssystem verbunden. Sind diese Terminals als Hand-Held Geräte ausgeführt, so ist deren Aktionsradius durch ein Anschlusskabel beschränkt. Hierdurch ist es in vielen Fällen gewährleistet, dass eine Bedienperson sicherheitsrelevante Bedienungen nur in unmittelbarer Nähe der technischen Anlage oder zumindest unter Einhaltung eines ausreichenden Sichtkontaktes vornehmen kann.

Anders ist dagegen die Situation, wenn ein HMI Gerät in Form eines mobilen Operators Panels ausgeführt ist. Ein solches mobiles Bedien- und Beobachtungsgerät kann z.B. über eine Funkstrecke mit dem Automatisierungssystem verbunden sein, die eine große Reichweite aufweist. So ist es in einem solchen Fall nicht ausgeschlossen, dass sich eine Bedienperson, die ein mobiles Bedien- und Beobachtungsgerät benutzt, sich so weit von einer dazugehörigen technischen Anlage entfernt, dass sicherheitsrelevante Bedienungen aus einer an sich unzulässigen Entfernung vorgenommen werden. In einem solchen Fall wäre dann die Personensicherheit nicht gewährleistet.

Zur Vermeidung einer Steuerung des Automatisierungssystems durch das mobile Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Hierzu kann das HMI System mit Auswertemitteln zur Verwaltung eines aktiven Bedienbereichs um die technische Anlage herum ausgestaltet werden. Die Lokalisierungsmittel werten den Abstand des mobilen Bedien- und Beobachtungsgeräts von der technischen Anlage aus, um detektieren zu können, ob sich das mobile Bedien- und Beobachtungsgerät innerhalb des aktiven Bedienbereichs befindet. Die hierfür erforderliche Abstandsmessung kann dabei z.B. mit Hilfe einer berührungslosen Datenübertragungsstrecke erfolgen, welche die Automatisierungskomponenten und das mobile Bedien- und Beobachtungsgerät datentechnisch miteinander verbinden. Für die Lokalisierung des mobilen Bedien- und Beobachtungsgeräts sind typischerweise eine Anzahl von Zusatzgeräten erforderlich, die an vordefinierten Referenzpunkten der Produktions-, Antriebs- oder Bearbeitungsanlage angebracht sind.

Eine solche Lokalisierung kann z.B. dadurch erfolgen, dass das mobile Bedien- und Beobachtungsgerät Datensignale aussendet, die von den Zusatzgeräten an den vordefinierten Referenzpunkten empfangen, verarbeitet und an die Automatisierungskomponenten weitergeleitet werden. Dies erfordert wiederum eine datentechnische Vernetzung zwischen den Zusatzgeräten und den Automatisierungskomponenten der Produktions-, Antriebs- oder Bearbeitungsanlage. Um eine Lokalisierung des mobilen Bedien- und Beobachtungsgeräts in einem Bereich um die Produktions-, Antriebs- oder Bearbeitungsanlage herum sicher zu gewährleisten, ist die Anbringung einer Vielzahl von Zusatzgeräten oftmals erforderlich, was zu einer Erhöhung des Implementierungsaufwandes sowie zu einer Kostensteigerung führt.

Der Erfindung liegt somit die Aufgabe zu Grunde, ein HMI System so weiterzugestalten, dass die zur Lokalisierung des mobilen Bedien- und Beobachtungsgeräts erforderlichen und an der Produktions-, Antriebs- oder Bearbeitungsanlage anzubringenden Zusatzgeräte ohne datentechnische Vernetzung mit den Automatisierungskomponenten realisiert werden können. Ferner ist es ein Ziel der vorliegenden Erfindung, die für die Lokalisierung erforderlichen Zusatzgeräte mit einer möglichst geringen Funktionalität auszustatten, die eine kostengünstige Herstellung dieser Zusatzgeräte erlaubt.

Die Aufgabe wird mit der in Anspruch 1 angegebenen Produktions-, Antriebs- oder Bearbeitungsanlage sowie mit dem in Anspruch 10 angegebenen HMI System gelöst. Weitere vorteilhafte Ausführung der Erfindung sind in den Unteransprüchen angegeben. Die erfindungsgemäße Produktions-, Antriebs- oder Bearbeitungsanlage ist mit mindestens einer Transpondervorrichtung zum Austausch von Funksignalen mit einem mobilen Bedienund Beobachtungsgerät zur Lokalisierung des mobilen Bedienund Beobachtungsgeräts ausgestattet. Typischerweise sind mehrere Transpondervorrichtungen an verschiedenen Referenzpunkten an der Produktions-, Antriebs- oder Bearbeitungsanlage angebracht, so dass bei einer beliebigen Positionierungen des mobilen Bedien- und Beobachtungsgeräts eine Sichtverbindung zwischen mindestens einer Transpondervorrichtung und dem mobilen Bedien- und Beobachtungsgerät stets gegeben ist. Hierbei ist das mobile Bedien- und Beobachtungsgerät vorzugsweise zum Senden von Signalen und zum Empfangen von der Transpondervorrichtung reflektierten Signalen ausgestattet.

Mit Hilfe von diesen von der Transpondervorrichtung reflektierten oder ausgesendeten Signalen ist das mobile Bedienund Beobachtungsgerät in der Lage, seine Position oder seinen Abstand bezüglich der Produktions-, Antriebs-, oder Bearbeitungsanlage zu bestimmen. Die Transpondervorrichtung hat hierbei die Aufgabe, Funksignale des mobilen Bedien- und Beobachtungsgeräts zu empfangen, diese zu modulieren und die modulierten Funksignale zurückzusenden. Hierbei muss die Transpondervorrichtung keinerlei Auswertung von Funksignalen zur Lokalisierung des mobilen Bedien- und Beobachtungsgeräts durchführen. Eine datentechnische Vernetzung zwischen der mindestens einen Transpondervorrichtung und den Automatisierungskomponenten der Produktions-, Antriebs- oder Bearbeitungsanlage ist daher nicht nötig.

Auf diese Art und Weise kann der Vernetzungsaufwand für die Automatisierungskomponenten sowie die Funktionalität der zur Lokalisierung des mobilen Bedien- und Beobachtungsgeräts erforderlichen Zusatzgeräten verringert werden. Die Funktionalität der an den vordefinierten Referenzpunkten der Produktions-, Antriebs- oder Bearbeitungsanlage angebrachten Zusatzgeräten kann daher mit Hilfe der mindestens einen Transpondervorrichtung realisiert werden.

Bei einer weiteren Ausführungsform der Erfindung ist die mindestens eine Transpondervorrichtung an der Produktions-, Antriebs- oder Bearbeitungsanlage anbringbar und zum Senden eines Funkantwortsignals in Reaktion auf ein Abfragesignal ausgebildet. Hierbei weist das von der Transpondervorrichtung gesendete Funkantwortsignal eine höhere Leistung als das an der Transpondervorrichtung ankommende Abfragesignal auf. Ferner ist das Funkantwortsignal vom Bedien- und Beobachtungsgerät empfangbar und ermöglicht eine Lokalisierung des Bedienund Beobachtungsgeräts mittels Auswertung. Die mindestens eine Transpondervorrichtung ist somit als eine aktive, das heißt verstärkende Transpondervorrichtung ausgebildet.

Die Transpondervorrichtung wird hierbei nicht von den Automatisierungskomponenten der Produktions-, Antriebs- oder Bearbeitungsanlage gesteuert, sondern reagiert lediglich auf empfangene Abfragesignale, welche bevorzugt vom mobilen Bedienund Beobachtungsgerät gesendet werden. Die Signal verstärkenden Funktion der Transpondervorrichtung gewährleistet, dass das Funkantwortsignal auch in einem relativ großen Abstand von der Produktions-, Antriebs- oder Bearbeitungsanlage vom Bedien- und Beobachtungsgerät detektiert und ausgewertet werden kann. Zudem ist eine solche Signal verstärkende Funktionalität besonders vorteilhaft, wenn zum Beispiel streuende oder partiell absorbierende Objekte Teile des Funkantwortsignals streuen oder absorbieren. Durch die Signal verstärkende Funktionalität der Transpondervorrichtung kann trotz solch störender äußerer Einflüsse gewährleistet werden, dass das Funkantwortsignal in hinreichender Leistung und Qualität vom mobilen Bedien- und Beobachtungsgerät empfangen werden kann.

Der Bedienbereich, in dem das mobile Bedien- und Beobachtungsgerät lokalisiert werden kann, wird somit im Vergleich zu einer rein passiven Transpondervorrichtung effektiv vergrößert. Der Bedienbereich des Bedien- und Beobachtungsgeräts kann somit den Erfordernissen der Automatisierungskomponenten und der Produktions-, Antriebs- oder Bearbeitungsanlage beliebig hinsichtlich seiner Größe angepasst werden.

Bei einer weiteren Ausführungsform der Erfindung hat die Transpondervorrichtung Empfangsmittel zum Empfangen des Abfragesignals und zum Übertragen des Abfragesignals in ein Empfangssignal. Ferner hat die Transpondervorrichtung ein Verstärkerelement zum Verstärken des Empfangssignals, eine Modulatoreinheit zur Modulation des Empfangssignals in ein moduliertes Empfangssignal gleicher Trägerfrequenz. Schließlich verfügt die Transpondervorrichtung über Sendemittel zum Senden des verstärkten und modulierten Empfangssignals als Funkantwortsignal. Die Modulation des Empfangssignals ermöglicht eine Differenzierung zwischen Signalen, die von der Transpondervorrichtung reflektiert werden und Signalen, die von anderen, beliebigen Objekten reflektiert werden und daher einen für die Lokalisierung störenden Hintergrund darstellen.

Ein Empfänger des mobilen Bedien- und Beobachtungsgeräts ist auf die Modulation des verstärkten Funkantwortsignals der Transpondervorrichtung abgestimmt, so dass aus einer Menge vom mobilen Bedien- und Beobachtungsgerät empfangenen Signalen nur solche mit einer von der Transpondervorrichtung aufgeprägten Modulation selektiv ausgewertet werden können.

Die Modulation kann als eine Amplituden- und/oder Phasenmodulation ausgebildet sein. Aufgrund besserer Signal zu Rausch Eigenschaften kommt vorzugsweise eine Phasenmodulation zum Einsatz. Diese kann insbesondere durch eine Phase Shift Keying Modulation, wie z. B. eine Binary Phase Shift Keying (BPSK), eine Quadrature Phase Shift Keying (QPSK), 8-PSK oder 16-PSK Modulation oder allgemein durch eine M-way Phase Shift Keying (MPSK) Modulation realisiert werden. Beim Binary Phase Shift Keying wechselt die Phase zwischen 0° und 180°. Vorzugsweise liegt die Frequenz dieser binären Modulation im KHz- bis MHz - Bereich, wenn das Trägersignal im GHz-Bereich liegt.

Bei einer weiteren Ausführungsform der Erfindung sind die Sendemittel und Empfangsmittel in einer Antenne integriert und die Antenne ist zum Empfangen des Abfragesignals und zum Senden des Funkantwortsignals ausgebildet. Sende- und Empfangsmittel sind somit in einem einzigen Bauteil integriert und ermöglichen somit eine platzsparende sowie kosteneinsparende Implementierung der Sende- und Empfangsmittel. Die Antenne kann hierbei zum Beispiel als Dual Port oder Duplex-Antenne ausgebildet sein.

Bei einer weiteren Ausführungsform der Erfindung verfügt die Transpondervorrichtung über ein Kopplungselement zur Kopplung des von den Empfangsmitteln übertragenen Empfangssignals zur Verstärkereinheit und zur Kopplung des verstärkten Empfangssignals zu den Sendemitteln. Das Kopplungselement kann hierbei entweder direkt in die Antenne integriert oder aber als separates Bauteil mit der Antenne verbunden sein. Das Kopplungselement ermöglicht eine effektive Isolation zwischen dem Eingangs- und Ausgangsport der Verstärkerschleife, d. h. das Kopplungselement gewährleistet eine hinreichende Isolation und Entkopplung zwischen dem Eingang und dem Ausgang der Verstärkerschleife.

Bei einer weiteren Ausführungsform der Erfindung ist das Kopplungselement als Zirkulator, Richtkoppler oder Wilkinson-Teiler ausgebildet. Insbesondere durch Richtkoppler und Wilkinson-Teiler kann das Kopplungselement kostengünstig und platzsparend realisiert werden.

Bei einer weiteren bevorzugten Ausführungsform der Erfindung ist die Transpondervorrichtung zum gleichzeitigen Empfangen des Abfragesignals und Senden des Funkantwortsignals ausgebildet. Das heißt, die Transpondervorrichtung arbeitet nicht im Pulsbetrieb, sondern in einem Continous Wave (cw) Operationsmodus. Vorzugsweise kommt zur Lokalisierung des mobilen Bedien- und Beobachtungsgeräts ein Frequenz modulierendes Dauerstrich-Radarsystem zum Einsatz. Ein solches Radarsystem, auch als Frequency Modulated Continous Way (FMCW) Radar bezeichnet, ermöglicht eine Abstandsbestimmung zu einem reflektierenden Objekt unter Verwendung von kontinuierlicher Radarstrahlung. Hierbei unterliegt die Frequenz der, vorzugsweise vom mobilen Bedien- und Beobachtungsgerät, ausgesendeten Radarsignale einer periodischen Modulation.

Da sich die Sendefrequenz des Radarsignals kontinuierlich ändert, weisen ausgesendete und vom Objekt, das heißt vom Transponder, reflektierte Radarsignale eine Frequenzverschiebung auf, die einen Laufzeitunterschied widerspiegelt. Dieser Laufzeitunterschied entspricht dem zweifachen Abstand zwischen dem mobilen Bedien- und Beobachtungsgerät und dem Transponder. Somit kann mit Hilfe des FMCW-Prinzips die Entfernung bzw. die relative Position zu einem stationären Objekt zuverlässig bestimmt werden.

Bei einer weiteren vorteilhaften Ausführungsform der Erfindung ist die Modulatoreinheit der Transpondervorrichtung weiterhin zur Modulation des Empfangssignals mit einer für die Transpondervorrichtung spezifischen Identifizierungssequenz ausgebildet. Das mobile Bedien- und Beobachtungsgerät ist weiterhin zur Identifizierung der mindestens einen Transpondervorrichtung mittels einer empfangenen Identifizierungssequenz ausgebildet. Vorzugsweise wird die Identifizierungssequenz mit Hilfe eines weiteren Modulationsverfahrens dem modulierten Empfangssignal aufgeprägt. Dieses weitere Modulationsverfahren wird vorzugsweise durch eine Amplitudenmodulation des Empfangssignals realisiert. Dieses Modulationsverfahren kann alternativ auch als Phasenmodulation, z.B. in Form einer Frequency-Shifted-Keying (FSK) Modulation realisiert werden.

In einem weiteren Aspekt weist die Erfindung ein HMI System mit zumindest einem mobilen Bedien- und Beobachtungsgerät für die Automatisierungskomponenten einer Produktions-, Antriebsoder Bearbeitungsanlage auf. Das HMI System hat Mittel zur berührungslosen Datenübertragung zwischen dem mobilen Bedienund Beobachtungsgerät und den Automatisierungskomponenten sowie mindestens eine an der Produktions-, Antriebs- oder Bearbeitungsanlage angebrachten Transpondervorrichtung zum Senden eines Funkantwortsignals in Reaktion auf ein Abfragesignal. Hierbei weist das von der Transpondervorrichtung gesendete Funkantwortsignal eine höhere Leistung als das an der Transpondervorrichtung ankommende Abfragesignal auf.

Zudem hat das HMI System Mittel zur Lokalisierung des mobilen Bedien- und Beobachtungsgeräts, welche zumindest zur Bestimmung eines Abstands zwischen dem mobilen Bedien- und Beobachtungsgerät und der Produktions-, Antriebs- oder Bearbeitungsanlage mittels Abfragesignal und Funkantwortsignal ausgebildet sind. Vorzugsweise ist die Transpondervorrichtung zur Modulation und zur Verstärkung eines empfangenen Abfragesignals ausgebildet, wobei das verstärkte und modulierte Signal, welches als Funkantwortsignal von der Transpondervorrichtung versendet wird, die gleiche Trägerfrequenz auch wie das Abfragesignal. Typischerweise sind Abfragesignale und Funkantwortsignale Radarsignale im GHz-Bereich und liegen zum Beispiel im ISM-Band.

Bei einer weiteren Ausführungsform der Erfindung ist das mobile Bedien- und Beobachtungsgerät zum Senden von Abfragesignalen und zum Empfangen von der Transpondervorrichtung gesendeten Funkantwortsignale und zur Bestimmung seiner Position oder seines Abstands relativ zur Position der Produktions-, Antriebs- oder Bearbeitungsanlage ausgebildet. Das mobile Bedien- und Beobachtungsgerät ist daher in der Lage, mit Hilfe von ausgesendeten Abfragesignalen und von mindestens einer Transpondervorrichtung gesendeten Funkantwortsignalen als Antwort auf die Abfragesignale, seine Position relativ zur Position der Anlage selbsttätig zu bestimmen.

Nach einer weiteren Ausführungsform der Erfindung hat das HMI System Auswertemittel zur Verwaltung eines aktiven Bedienbereichs, welcher die Automatisierungskomponenten für sicherheitsrelevante Bedienungen der technischen Anlage über das mobile Bedien- und Beobachtungsgerät nur dann aktivieren, wenn die Mittel zur Lokalisierung detektieren, dass sich das mobile Bedien- und Beobachtungsgerät innerhalb des aktiven Bereichs befindet.

Bevorzugte Ausführungsformen der Erfindung werden nachfolgend anhand der Zeichnungen näher erläutert. Es zeigen:
- Figur 1: ein schematisches Blockdiagramm des erfindungsgemäßen HMI Systems,
- Figur 2: ein Blockdiagramm einer Transpondervorrichtung.

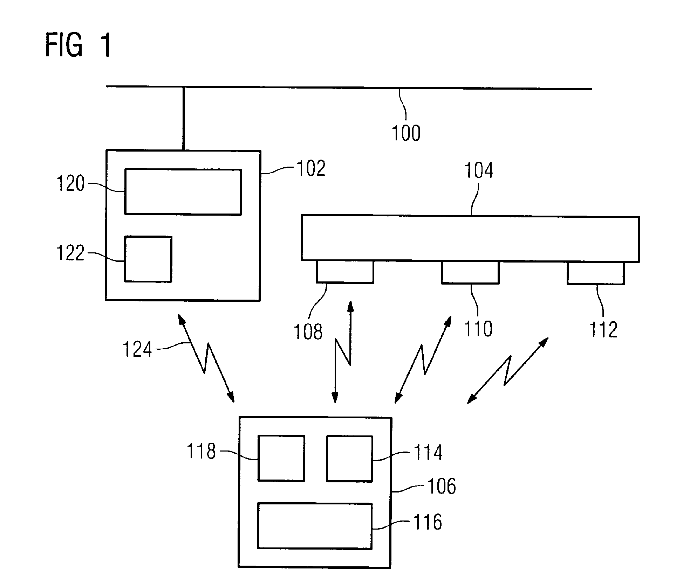

Figur 1 zeigt beispielhaft eine Produktions-, Antriebs- oder Bearbeitungsanlage 104 mit technischen Betriebsmitteln, die z.B. Bestandteil einer fertigungs- oder prozesstechnischen Vorrichtung sein können. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem mindestens ein Reflektormodul, vorzugsweise über eine Reihe von Transpondervorrichtungen 108, 110, 112, die an verschiedenen Referenzpunkten an der technischen Anlage 104 angebracht sind. Diese Transponder, die auch als TAGs bezeichnet werden, sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Reflektormodulen 108, 110, 112 selbsttätig durchzuführen. Die Transponder 108, 110, 112 müssen hierbei keine Signalauswertung oder Signalverarbeitung vornehmen und erfordern daher keine separate Vernetzung. Die einzelnen Transponder 108, 110, 112, können daher sehr robust und kostengünstig in großer Stückzahl hergestellt werden.

Das Lokalisierungsmodul 114 ist vorzugsweise als FMCW-Radar ausgebildet und die einzelnen Transponder sind als aktive, signalverstärkende Transponder ausgebildet. Zur Lokalisierung wird typischerweise nur ein Funkantwortsignal eines einzelnen Transponders, z.B. Transponder 108 benötigt. Das Anbringen mehrerer Transponder an die Anlage ist jedoch vorteilhaft, da somit bei einer nahezu beliebigen Position des mobilen Bedien- und Beobachtungsgeräts hinreichend gewährleistet werden kann, dass zumindest einer der Transponder 108, 110, 112 in direkter Sichtverbindung mit dem mobilen Bedien- und Beobachtungsgerät steht.

Weiterhin ist die signalverstärkende Funktion der Transponder für die Lokalisierung des mobilen Bedien- und Beobachtungsgeräts von Vorteil. Einerseits kann so die Sendeleistung des mobilen Bedien- und Beobachtungsgeräts auf ein Minimum reduziert werden wobei gleichzeitig sichergestellt ist, dass die Funkantwortsignale eine erforderliche Mindestleistung aufweisen, so dass diese für beliebige Positionen des mobilen Bedien- und Beobachtungsgerät von diesem in einer erforderlichen Qualität empfangen werden können.

Mittels einer von den Transpondern 108, 110, 112 durchgeführten Subträger-Modulation können die von den Reflektormodulen reflektierten Radarsignale selektiv ausgewertet werden. Die Subträger-Modulation ermöglicht somit eine Trennung von Hintergrundsignalen, die z.B. an einer Metallfläche reflektiert wurden, und solchen Signalen, die mittels eines Transponders zum mobilen Bedien- und Beobachtungsgerät reflektiert wurden. Durch eine entsprechende Subträger-Filterung im Lokalisierungsmodul 114 kann somit, mit Hilfe eines FMCW-Radars, eine eindeutige Entfernungsmessung für stationäre Ziele sogar mit einem reellen Empfänger im Lokalisierungsmodul 114 realisiert werden.

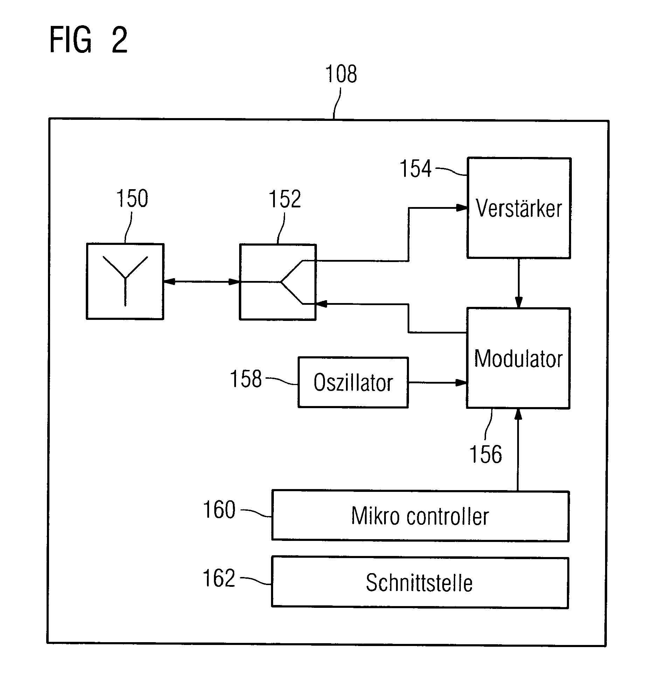

Figur 2 zeigt ein Blockdiagramm einer Transpondervorrichtung 108, die ein Antennenmodul 150, ein Kopplungselement 152, einen Verstärker 154, einen Modulator 156 sowie einen Oszillator 158, ein Kontrollmodul 160 und eine Schnittstelle 162 aufweist. Die Schnittstelle 162 ermöglicht eine Spannungsund Stromversorgung und gegebenenfalls Mittel zur externen Kalibrierung oder Initialisierung des Transponders 108. Das Kontrollmodul 160 ist bevorzugt als ein Mikro-Controller ausgebildet. Es kontrolliert den Modulator 156 und ermöglicht eine Individualisierung des Transponders 108, durch eine Ansteuerung des Modulators 156 mit einer Transpondervorrichtung spezifischen Identifizierungssequenz.

Das Antennenmodul 150 ermöglicht Empfangen von Abfragesignalen, die bevorzugt vom mobilen Bediengerät 106 ausgesendet werden und gleichzeitiges Senden des Funkantwortsignals zum mobilen Bedien- und Beobachtungsgerät. Das Antennenmodul 150 ist über das Kopplungselement 152 an den Verstärker 154 und an den Modulator 156 gekoppelt. Vom Antennenmodul 150 empfangene Signale werden mit Hilfe des Kopplungselements 152 an den Verstärker 154 weitergeleitet. Dort werden empfangene Signale verstärkt und schließlich dem Modulator 156 übergeben.

Der Modulator 156 ist bevorzugt als Phasenmodulator ausgebildet und ermöglicht eine Phasenmodulation des verstärkten Empfangssignals mit einer Subträgerfrequenz. Die Frequenz dieses Subträger-Signals liegt typischerweise im KHz- bis MHz-Bereich, wenn das Trägersignal im GHz-Bereich, zum Beispiel im ISM-Band liegt. Die Phasenmodulation kann zum Beispiel durch eine Phase Shift Keying Modulation, wie zum Beispiel eine Binary Phase Shift Keying BPSK, eine Quadrature Phase Shift Keying QPSK, 8-PSK oder 16-PSK Modulation oder allgemein durch eine M-way Phase Shift Keying MPSK Modulation realisiert werden.

Der Oszillator 158 erzeugt ein Treibersignal, welches in den Modulator 156 eingespeist wird. Die Frequenz dieses Treibersignals entspricht typischerweise der Frequenz des Subträger-Signals.

Das Kopplungselement 152 kann zum Beispiel durch einen Zirkulator oder eine Richtungsgabel mit drei Toren realisiert werden. Bevorzugt wird das Kopplungselement 152 jedoch durch einen Richtkoppler, wie zum Beispiel einen 180°-Hybridkoppler oder einen 90°-Hybridkoppler realisiert. Alternativ kann ebenso ein Wilkinson-Teiler als Kopplungselement 152 implementiert werden.

## Patentansprüche

1. Produktions-, Antriebs- oder Bearbeitungsanlage (104) mit mindestens einer Transpondervorrichtung (108, 110, 112) zum Austausch von Funksignalen mit einem mobilen Bedien- und Beobachtungsgerät (106) zur Lokalisierung des mobilen Bedienund Beobachtungsgeräts.

2. Anlage nach Anspruch 1, wobei die Transpondervorrichtung (108, 110, 112) an der Produktions-, Antriebs- oder Bearbeitungsanlage (104) anbringbar und zum Senden eines Funkantwortsignals in Reaktion auf ein Abfragesignal ausgebildet ist, und das von der Transpondervorrichtung gesendete Funkantwortsignal eine höhere Leistung als das an der Transpondervorrichtung ankommende Abfragesignal aufweist, das Funkantwortsignal vom Bedien- und Beobachtungsgerät empfangbar und zur Lokalisierung des Bedien- und Beobachtungsgeräts auswertbar ist.

3. Anlage nach Anspruch 1, wobei die Transpondervorrichtung über
- Empfangsmittel (150) zum Empfangen des Abfragesignals und zum Übertragen des Abfragesignals in ein Empfangssignal,
- ein Verstärkerelement (154) zum Verstärken des Empfangssignals,
- eine Modulatoreinheit (156) zur Modulation des Empfangssignals in ein moduliertes Empfangssignal gleicher Trägerfrequenz ,
- Sendemittel (150) zum Senden des verstärkten Empfangssignals als Funkantwortsignal
verfügt.

4. Anlage nach Anspruch 3, bei welcher die Sendemittel und Empfangsmittel in einer Antenne (150) integriert sind und die Antenne zum Empfangen des Abfragesignals und zum Senden des Funkantwortsignals ausgebildet ist.

5. Anlage nach Anspruch 3, mit einem Kopplungselement (152) zur Kopplung des von den Empfangsmitteln übertragenen Empfangssignals zur Verstärkereinheit und zur Kopplung des verstärkten Empfangssignals zu den Sendemitteln.

6. Anlage nach Anspruch 5, wobei das Kopplungselement als Zirkulator, Richtkoppler oder Wilkinson-Teiler ausgebildet ist.

7. Anlage nach einem der Ansprüche 2 bis 6, wobei die Transpondervorrichtung (108, 110, 112) zum gleichzeitigen Empfangen des Abfragesignals und Senden des Funkantwortsignals ausgebildet ist.

8. Anlage nach einem der Ansprüche 1 bis 7, wobei die Modulatoreinheit (156) weiterhin zur Modulation des Empfangssignals mit einer für die Transpondervorrichtung (108, 110, 112) spezifischen Identifizierungssequenz ausgebildet ist.

9. HMI System mit zumindest einem mobilen Bedien- und Beobachtungsgerät (106) für die Automatisierungskomponenten (102) einer Produktions-, Antriebs- oder Bearbeitungsanlage (104), und mit
- Mitteln zur berührungslosen Datenübertragung zwischen dem mobilen Bedien- und Beobachtungsgerät und den Automatisierungskomponenten,
- mindestens einer an der Produktions-, Antriebs- oder Bearbeitungsanlage angebrachten Transpondervorrichtung (108, 110, 112) zum Senden eines Funkantwortsignals in Reaktion auf ein Abfragesignal, wobei das von der Transpondervorrichtung gesendete Funkantwortsignal eine höhere Leistung als das an der Transpondervorrichtung ankommende Abfragesignal aufweist,
- Mitteln zur Lokalisierung des mobilen Bedien- und Beobachtungsgeräts, welche zumindest zur Bestimmung eines Abstands zwischen dem mobilen Bedien- und Beobachtungsgerät und der Produktions-, Antriebs- oder Bearbeitungsanlage mittels Abfragesignal und Funkantwortsignal ausgebildet sind.

10. HMI System nach Anspruch 9, wobei das mobile Bedien- und Beobachtungsgerät (106) zum Senden von Abfragesignalen und zum Empfangen von der Transpondervorrichtung (108, 110, 112) gesendeten Funkantwortsignalen und zur Bestimmung seiner Position oder seines Abstands relativ zur Position der Produktions-, Antriebs- oder Bearbeitungsanlage (104) ausgebildet ist.

11. HMI System nach einem der Ansprüche 9 oder 10, mit Auswertemitteln zur Verwaltung eines aktiven Bedienbereichs, welche die Automatisierungskomponenten (102) für sicherheitsrelevante Bedienungen der technischen Anlage über das mobile Bedien- und Beobachtungsgerät (106) nur dann aktivieren, wenn die Mittel zur Lokalisierung detektieren, dass sich das mobile Bedien- und Beobachtungsgerät innerhalb des aktiven Bereichs befindet.
